# EUROPEAN PATENT APPLICATION

(11) **EP 1 452 731 A2**
(43) Date of publication of application: **01.09.2004**
(21) Application number: 04250984.4
(22) Date of filing: 24.02.2004
(51) Int. Cl.: F03B 1/02

(54) **Fastening of Pelton turbine buckets**

(30) Priority: 28.02.2003 GB 0304556
(71) Applicant: Gilbert Gilkes & Gordon Limited, Cumbria LA9 7BZ (GB)
(72) Inventor: Aggidis, George Athanasios, Kendal LA9 5EZ (GB); Cattley, Robert, Kendal, LA9 5PX (GB)
(74) Representative: Cardwell, Stuart Martin

(57) **Abstract**

A turbine rotor (eg: a Pelton wheel) is described which comprises a plurality of individual radial body members (11) comprising one or more impeller elements (eg: buckets) (1). The radial body members comprises segments which have leading (13) and trailing (15) radial abutment surfaces that contact with the respective radial abutment surfaces of adjacent radial body members when assembled as a unit. Each radial body member comprises at least one further abutment (21), preferably two at opposite axial ends (17,19) thereof, and locating means (26,27) is provided which co-operates with the further abutment means, preferably directly. Wedging means which is tapered in the radial direction relative to the axis of rotation of the turbine rotor, acts between the radial body members and the locating means, and means is provided which acts via said wedging means to draw the radial body members radially inwards to hold them together as a unit.

More particularly the locating means comprises two collars (26,27) which are engageable with a respective one of the axial end abutments (21) of the radial body members, and the wedging means comprises frusto conical formations of the further abutments of the radial body members and the locating means.

The means acting via the wedging means to draw the body members radially inwards comprises axial clamping means (35) operable between the two collars and/or taper action locating means (34,38) securing the two collars to a connecting shaft or axle element (6).

## Description

The present invention relates to an improved construction of turbine rotor and has particular application to a Pelton wheel runner, but without limitation to same.

A Pelton wheel runner comprising a plurality of buckets on a common hub is traditionally made as a single casting. This single casting is usually difficult to cast due to the complexity and proximity of the individual buckets. Following casting, the machining of the Pelton wheel is not the easiest of operations, and the surfaces of the buckets have to be smoothed with a grinding tool. The problem of access for the tool towards the root of the buckets makes the job of finishing a long, expensive and tedious process requiring a high degree of skill.

A Pelton wheel is most usually used to convert the energy of moving water into rotational energy to drive a load. Considerable wear of the buckets can occur and it is common for the wheels to be removed for repair, eg: by a weld repair. If the damaged bucket is beyond weld repair then the whole Pelton runner is scrap.

Proposals have been made in DE 3938357 to construct a Pelton wheel from a plurality of individual segmental elements each formed with a plurality of buckets, and which are assembled together as a unit by securing them between opposed flanged collars by pin means passing through axial holes in the individual segmental elements and by the use of headed bolts whose heads engage with oppositely disposed end caps and whose shanks engage threadingly with the pins to cause the individual segmental elements to be clamped axially between the flanged collars. In addition, pairs of pin means are provided at the junction of adjacent individual segmental elements to facilitate fine adjustment of the individual segmental elements, and hence the buckets, by way of ball/conical faces. The construction has the disadvantage that it requires many parts, many of which require precision machining, and assembly requires precision fitting.

It is an aim of the present invention to provide an improved construction which provides a solution to these problems and to provide a unique combination of technical (engineering) benefits as well as manufacturing cost savings in relation to a Pelton wheel runner construction.

It is a further aim to provide a beneficial construction of turbine rotor for applications other than that of a Pelton wheel runner.

Accordingly, a first aspect of the present invention provides a turbine rotor having an axis of rotation and comprising a hub or axle element, and a plurality of individual radial body members carrying one or more impeller elements, and wherein the plurality of radial body members are secured with respect to said hub or axle element, each radial body member having leading and trailing radial abutment surfaces relative to the direction of rotation of the rotor that contact with the respective radial abutment surfaces of adjacent radial body members, and each radial body member further comprising at least one further abutment means, and the turbine rotor further comprising locating means in direct or indirect engagement with the further abutment means of the radial body members, and wedging means which is tapered in the radial direction relative to the axis of rotation and which acts between said radial body members and said locating means, and further comprising means acting via said wedging means to draw the radial body members radially inwards and hold them together as a unit.

The radial body member may be common to a plurality of radially disposed impeller elements, eg: two, three, etc. Preferably the plurality of impeller elements are formed integrally with the associated radial body member, eg: by casting, but they could be secured to the body member by any other positive fixing means. However, in a preferred embodiment each impeller element is formed with its own radial body member. A lost wax investment casting process is preferred. The body members form segments of the rotor and the opposite radial abutment surfaces thereof are tapered so that they converge on and intersect at the axis of rotation.

Preferably the further abutment means comprises axial abutment means. Preferably each radial body member comprises two further abutment means which are disposed to opposite axial ends thereof. Preferably the locating means comprises two locating elements that are engageable with a respective one of the two further abutment means of the radial body members.

The wedging means may be a separate member or members interposed between the further abutment means and the locating means. More preferably the wedging means is incorporated in at least one of the further abutment means or said locating means. Preferably the or each locating means comprises an annular locating ring which is provided with a frusto conical abutment that is co-operable with a respective one of the further abutment means of the radial body members. Preferably the or each further abutment means of each radial body means is radially tapered. Conveniently the tapered abutment means is in the form of a flange extending in the axial direction, and, on assembly, the flanges of all the radial body elements and hence the impeller elements form an annular (frusto conical) tapered flange that is acted on by the frusto conical abutment of the annular locating ring.

Preferably means is provided for directly securing together the respective pair of locating elements. Said means comprises an axial clamping means and may be used on its own to locate the radial body elements and hence the impeller elements together as a unit by drawing together the two annular locating elements. Means is provided to connect the locating rings with respect to a connecting shaft, eg: the axle element. A shaft key may be used to connect the locating elements to the shaft. Each locating element may have its own key, or one key may be common to both, or only one key used and the clamping means used to connect the keyed element to the non-keyed element. More preferably each of the annular locating rings is connectable individually with a connecting shaft, eg: the axle element. Conveniently the means connecting the or each locating element to the connecting shaft comprises a tapered locking element, such as elements made by the German company Ringfeder or others. In a preferred construction each locating ring is provided with its own tapered locking ring (comprising two relatively moveable parts) which engages between the shaft and the locating ring. The action of tightening the locking element generates an axial movement of the locating ring relative to the shaft and thereby causes the radial body members and hence the impeller elements to be drawn inwardly by virtue of the co-operating tapered abutment surfaces. The provision of radial leading and trailing abutments on the radial body members gives rise to a circumferential wedging action as the radial body members are drawn inwardly by the annular locating rings.

The respective means to locate each annular locating element may be provided in addition to or as an alternative to the aforesaid axial clamping means. Other means of securing the annular locating rings to the axle may be used.

According to a preferred embodiment, the invention provides a turbine rotor having an axis of rotation and comprising a hub or axle element, a plurality of individual radial body members carrying one or more impeller elements, and two annular collars each having a frusto conical abutment surface, and wherein each radial body member comprises a frusto conical tapered flange to opposite ends thereof, the frusto conical tapered flanges to one axial end being co-operable with the frusto conical abutment surface of one annular collar, and the frusto conical tapered flanges to the other axial end being co-operable with the frusto conical abutment surface of the other annular collar, and further comprising means to secure the radial body members with regard to said hub or axle, and means acting via said frusto conical surfaces to draw the radial body members radially inwards.

In a preferred application the turbine rotor is a Pelton wheel runner and the impeller elements are buckets. The invention is described by way of example only hereinafter in relation to its application to a Pelton wheel runner. The use of conical tapered shoulders clamps the buckets by forcing them together, in a simple manner and has the advantage that it uses a minimum number of components and no precision fitting is required.

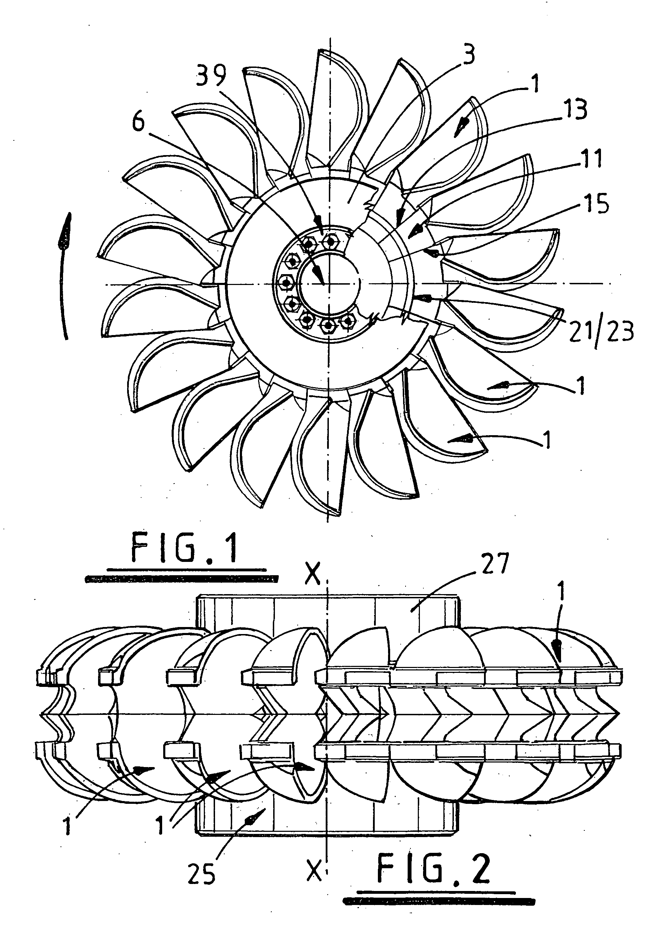

The present invention will now be described further, by way of example only, with reference to the accompanying drawings; in which:-
Figure 1 is a broken away front view of a Pelton wheel runner embodying the invention,
Figure 2 is a top view of the Pelton wheel runner of Figure 1,
Figure 3 is a partial section of Figure 1, and
Figure 4 is a perspective view of a bucket used in the embodiment of Figures 1 to 3.

Referring to the drawings, a turbine rotor of the type comprising a Pelton wheel runner is described and illustrated. However, whilst the present invention is described by way of example in relation to its application to Pelton wheel runner, it will be apparent to one skilled in the art that it can be applied to other types of turbine rotor, and the protection is not limited to a Pelton wheel runner.

The Pelton wheel runner according to the illustrated embodiment is made of a plurality of individual segments and each segment is formed with one bucket 1 in the described example and are conveniently referred to as bucket segments. The bucket segments are assembled together in a radial disposition relative to an axis of rotation X-X. Eighteen segments each with one bucket are shown in the illustrated example but it will be understood that the number of segments and the number of buckets per segment may vary according to any particular design requirement. In the illustrated embodiment the wheel is adapted to be mounted on a shaft 6.

Each bucket segment has a body 11 which has, in relation to the direction of rotation of the wheel, leading 13 and trailing 15 radial abutment surfaces. In assembling the plurality of bucket segments together to form a runner, the trailing abutment surface of the body of one bucket segment engages with the leading abutment surface of the body of the next adjacent bucket segment. For simplicity the radial abutment surfaces are plain surfaces, but could include ribs and rebates as desired to limit machining and/or for location purposes. Any ribs or rebates should not inhibit radial movement for locating purposes as described further hereinafter.

The axial end faces of the runner are defined by opposite axial faces 17,19 of the individual bucket segments. The opposite axial faces each include an axially projecting radially tapered abutment 21 which, when the plurality of bucket segments are assembled together define an axially extending radially tapered annular flange 23 or frusto conical shoulder to each axial end of the runner. Each bucket segment body has a radially inwardly directed surface 25.

In the illustrated embodiment the hub of the Pelton wheel runner is defined by two annular elements 26,27 which form part of the impeller element locating means. Each annular element or locating ring has an annular recess 29 to capture the annular flange of the bucket segments. More particularly one annular element 26 has abutment means 31 disposed to engage with the radially tapered abutment 21 of each of the plurality of bucket segments disposed to one axial end thereof, whilst the other annular element 27 has abutment means 33 disposed to engage with the radially tapered abutment 21 of the opposite end of the bucket segment. More particularly each annular element 26,27 has a tapered frusto conical abutment. Preferably the angle of inclination of the respective tapered abutments of the bucket segments and the flange correspond.

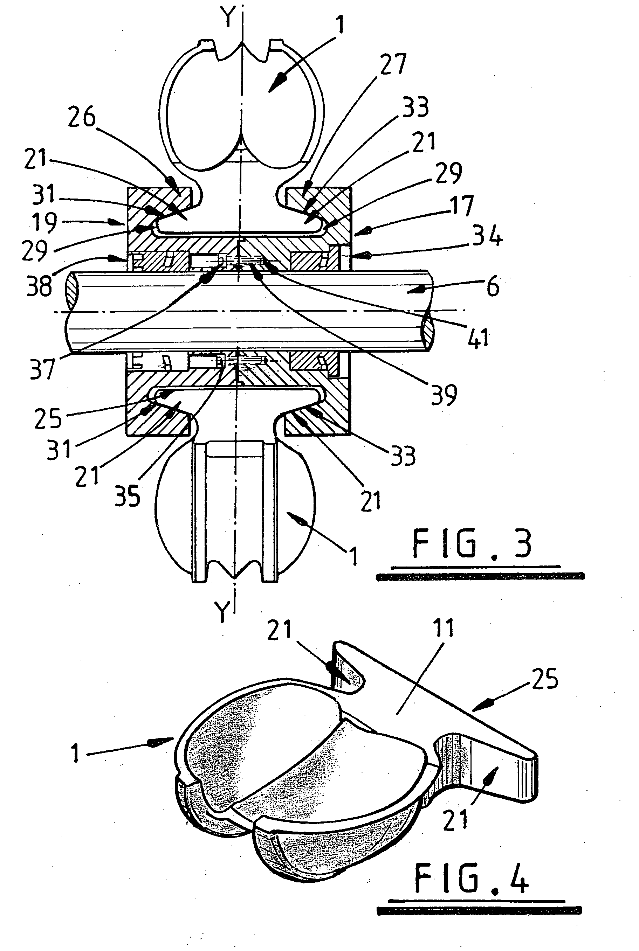

First means for securing the two halves of the hub together is provided by a plurality of threaded bolts 35 whose heads 37 are engaged in respective recesses 38 in one of the halves and whose threaded shanks 39 engage with respective threaded holes 41 in the other half. As will be seen from Figure 3 the two annular elements are drawn together in an axial direction by the action of the bolt, thereby drawing the tapered abutments thereof in to contact with the tapered flanges of the bucket segments. This in turn applies a radially directed clamping force to the bucket segments drawing them radially inwardly. The inward movement is resisted by the co-operating engagement between the radial abutment surfaces of the bucket segments. More preferably, and as detailed in the illustrated embodiment, each of the annular elements has its own tapered clamping element 34,38 by which each is secured individually to the shaft 6. The construction of the tapered locking elements is such that on tightening there is a relative axial movement between the shaft and the annular element. More particularly the tapered clamping element engages positively with the shaft whilst the annular element moves axially with respect thereto. This determines the final clamping force applied to the bucket segments and, where provided in addition to the first clamping means, overrides the action of the first clamping means.

In the illustrated embodiment the clamping bolts 35 are shown on substantially the same diameter as the locking element 38 and inset behind it. In an alternative design the clamping bolts are disposed at a greater radial distance from the axis X-X, closer towards the neck of the buckets, (especially for larger diameter units) and are accessible from one axial end when the element 38 or any alternative fixing element is in position.

By providing tapered flanges to either axial end of the runner relative to its central plane Y-Y and corresponding tapered flanges on both annular elements, the clamping operation will serve to draw the bucket segments uniformly radially inwardly which is desirable for most applications. However in some applications this may be seen as unnecessary and one of the axial ends of the runner may be provided with a simple abutment surface on each bucket segment that is configured to allow radially inward movement under the action of co-operating tapered abutments of the other axial end of the runner.

## Claims

1. A turbine rotor having an axis of rotation and comprising a hub or axle element, and a plurality of individual radial body members (11) carrying one or more impeller elements (1), and wherein the plurality of radial body members are secured with respect to said hub or axle element, each radial body member having leading (13) and trailing (15) radial abutment surfaces relative to the direction of rotation of the rotor that contact with the respective radial abutment surfaces of adjacent radial body members, and each radial body member further comprising at least one further abutment means (21), and the turbine rotor further comprising locating means in direct or indirect engagement with the further abutment means of the radial body members, and wedging means which is tapered in the radial direction relative to the axis of rotation and which acts between said abutment means and said locating means, and **characterised by** means acting via said wedging means to draw the radial body members radially inwards resisted only by contact of the respective adjacent leading and trailing radial abutment surfaces of the radial body members to hold them together as a unit.

2. A turbine rotor as claimed in claim 1 to which the radial body member is common to a plurality of radially disposed impeller elements.

3. A turbine rotor as claimed in claim 2 in which the plurality of impeller elements are formed integrally with the associated radial body member

4. A turbine rotor as claimed in claim 2 in which the plurality of impeller elements are discrete members that are secured to the body member by positive fixing means.

5. A turbine rotor as claimed in claim 1 in which each impeller element is formed with its own radial body member.

6. A turbine rotor as claimed in any one of claims 1 to 5 in which the body members form segments of the rotor and the leading (13) and trailing (51) radial abutment surfaces thereof are tapered so that they converge on and intersect at the axis of rotation.

7. A turbine rotor as claimed in any one of claims 1 to 6 in which the further abutment means comprises axial abutments means (21).

8. A turbine rotor as claimed in any one of claims 1 to 7 in which each radial body member comprises two of said further abutment means (21) which are disposed to opposite axial ends thereof.

9. A turbine rotor as claimed in claim 8 in which the locating means comprises two locating element (31, 33) that are engageable with a respective one of the two further abutment means (21) of the radial body members.

10. A turbine rotor as claimed in any one of claims 1 to 9 in which the wedging means comprise one or more separate members interposed between the further abutment means and the locating means.

11. A turbine rotor as claimed in any one of claims 1 to 9 in which the wedging means is incorporated in at least one of the further abutment means (21) of each of the radial body members or said locating means (31, 33).

12. A turbine rotor as claimed in any one of claims 1 to 11 in which the or each locating means (31, 33) comprises an annular locating ring which is provided with a frusto conical abutment.

13. A turbine rotor as claimed in any one of claims 1 to 9 or claim 12 when appended in any one of claim 1 to 9 in which the or each further abutment means (21) of each radial body means is radially tapered.

14. A turbine rotor as claimed in claim 13 when dependent on claim 12 in which the radially tapered abutment means (21) is in the form of a flange extending in the axial direction, and, wherein on assembly, the flanges of all the radial body elements form an annular frusto conical tapered flange that is acted on by the frusto conical abutment of the annular locating ring.

15. A turbine rotor as claimed in claim 9 in which means (35) is provided for directly securing together the two locating elements (31, 33).

16. A turbine rotor as claimed in claim 15 in which the securing means comprises an axial clamping means.

17. A turbine rotor as claimed in any one of the preceding claims in which means (34, 38) is provided to secure the locating means (31, 33) individually to a separate connecting member (6).

18. A turbine rotor as claimed in claim 17 in which the separate connecting member comprises the axle element (6).

19. A turbine rotor as claimed in claims 17 or 18 when dependent on claim 12 or any of claims 13 to 16 when dependent on claim 12 in which a respective means is provided to connect the respective locating rings to the connecting member.

20. A turbine rotor as claimed in claim 19 in which said means comprises a tapered locking element (34, 38).

21. A turbine rotor as claimed in claim 20 in which each locating ring is provided with its own tapered locking ring comprising two relatively moveable parts which engage between the connecting member (6) and the locating ring (31, 38) and in which at least one locking ring acts to generate an axial movement of the locating ring relative to the connecting member and thereby cause the radial body members and hence the impeller elements to be drawn inwardly by virtue of the co-operating tapered abutment surfaces.

22. A turbine rotor as claimed in any one of claims 17 to 21 when dependent on claim 16 in which the respective means to locate each annular locating element are provided in addition to the aforesaid axial clamping means.

23. A turbine rotor as claimed in any one of the preceding claims in which the turbine rotor is a Pelton wheel runner and the impeller elements are buckets.
